(19) **Europäisches Patentamt / European Patent Office / Office européen des brevets**

(11) **EP 3 016 426 B1**

(12) # EUROPEAN PATENT SPECIFICATION

(45) Date of publication and mention
of the grant of the patent:
**27.03.2019 Bulletin 2019/13**

(51) Int Cl.:
*H04W 16/14* *(2009.01)*     *H04W 52/54* *(2009.01)*
*H04W 52/38* *(2009.01)*     *H04W 52/36* *(2009.01)*

(21) Application number: **14894188.3**

(22) Date of filing: **17.07.2014**

(86) International application number:
**PCT/CN2014/082415**

(87) International publication number:
**WO 2016/008138 (21.01.2016 Gazette 2016/03)**

(54) **POWER CONTROL METHOD, NODE B AND USER EQUIPMENT**

LEISTUNGSSTEUERUNGSVERFAHREN, KNOTEN B UND BENUTZERVORRICHTUNG

PROCÉDÉ DE COMMANDE DE PUISSANCE, NOEUD B ET ÉQUIPEMENT UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.05.2016 Bulletin 2016/18**

(73) Proprietor: **Huawei Technologies Co., Ltd.
Longgang District
Shenzhen, Guangdong 518129 (CN)**

(72) Inventors:
• **LI, Xiaocui
  Shenzhen
  Guangdong 518129 (CN)**
• **WANG, Jian
  Shenzhen
  Guangdong 518129 (CN)**

(74) Representative: **Kreuz, Georg Maria
Huawei Technologies Duesseldorf GmbH
Riesstraße 25
80992 München (DE)**

(56) References cited:
WO-A1-2013/078946     CN-A- 102 724 675
CN-A- 102 833 691     CN-A- 102 958 066
CN-A- 103 493 529     US-A1- 2012 275 395
US-A1- 2014 094 213

• HUAWEI ET AL: "Power control for D2D Signals",
3GPP DRAFT; R1-141928, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Seoul,
Korea; 20140519 - 20140523 18 May 2014
(2014-05-18), XP050789048, Retrieved from the
Internet:
URL:http://www.3gpp.org/ftp/tsg_ran/WG1_RL
1/TSGR1_77/Docs/R1-141928.zip [retrieved on
2014-05-18]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

Embodiments of the present invention relate to the communications field, and more specifically, to a power control method, a base station, and user equipment.

**BACKGROUND**

Device to device proximity service (full English name: Device to Device Proximity Service, D2D ProSe for short) between user equipments (full English name: User Equipment, UE for short) has become a hot topic for a Long Term Evolution (full English name: Long Term Evolution, LTE for short) system.

Currently, UE performing D2D communication generally uses maximum transmit power to transmit a D2D signal. However, when UE in a mobile telecommunication system (such as an LTE system) communicates with an evolved base station (full English name: evolved Node B, eNB for short), the eNB generally adjusts transmit power of the UE step by step according to a transmit power control (full English name: Transmit Power Control, TPC for short) command in downlink control information (full English name: Downlink Control Information, DCI for short). Therefore, when the UE performs D2D communication in the mobile telecommunication system (such as the LTE system), it takes a long time to acquire the maximum transmit power.

US 2014/094213 A1 describes approaches for use in device-to-device services to facilitate power control for signals.

HUAWEI ET AL: "Power control for D2D Signals", 3GPP DRAFT; R1-141928, discloses approaches for use in device-to-device services that eNodeB indicates the D2D UE to transmit the D2D signals using the maximum transmission power.

**SUMMARY**

Embodiments of the present invention provide a power control method, a base station, and user equipment, so that the user equipment can quickly acquire maximum transmit power when performing D2D communication in a mobile telecommunication system (such as an LTE system).

A first aspect provides a power control method, where the method includes: determining, by a base station, a transmit power control parameter, where the transmit power control parameter is used to determine maximum transmit power of user equipment; sending, by the base station, the transmit power control parameter to the user equipment; and instructing, by the base station, the user equipment to use the maximum transmit power of the user equipment to send a device-to-device signal, the instructing, by the base station, the user equipment to use the maximum transmit power of the user equipment to send a device-to-device signal includes: sending, by the base station, downlink control information to the user equipment, where the downlink control information comprises a transmit power control command, the transmit power control command includes a dynamic power control index indicating the maximum transmit power of the user equipment and which is used to instruct the user equipment to use the maximum transmit power of the user equipment to send the device-to-device signal.

With reference to the first possible implementation manner of the first aspect, in a second possible implementation manner of the first aspect, the instructing, by the base station, the user equipment to use the maximum transmit power of the user equipment to send a device-to-device signal further includes: sending, by the base station, indication signaling to the user equipment, where the indication signaling carries a location of an indication bit in the downlink control information, where the indication bit is used to instruct the user equipment to use the maximum transmit power of the user equipment to send the device-to-device signal.

With reference to the first possible implementation manner of the first aspect, in a third possible implementation manner of the first aspect, the downlink control information includes a transmit power control command, where the transmit power control command is used to instruct the user equipment to use the maximum transmit power of the user equipment to send the device-to-device signal.

With reference to the first possible implementation manner of the first aspect, in a fourth possible implementation manner of the first aspect, the downlink control information includes a dynamic power control index, where the dynamic power control index is used to instruct the user equipment to use the maximum transmit power of the user equipment to send the device-to-device signal, and the dynamic power control index refers to a value of one or more bits.

With reference to the fourth possible implementation manner of the first aspect, in a fifth possible implementation manner of the first aspect, an indication value of the dynamic power control index is the greatest.

With reference to the fourth possible implementation manner of the first aspect, in a sixth possible implementation manner of the first aspect, the dynamic power control index is newly added.

With reference to the first aspect, in a seventh possible implementation manner of the first aspect, the method further includes: instructing, by the base station, the user equipment to calculate current transmit power $P(i)$ of the user equipment according to a formula $P(i) = \min\{P_{CMAX}(i), 10\log_{10}(M(i)) + P_o + \alpha \cdot PL + \Delta(i) + f(i)\}$, where i is a subframe number, $P_{CMAX}(i)$ is maximum transmit power of the user equipment in subframe $i$, $M(i)$ is frequency domain bandwidth allocated in subframe $i$, $P_o$ is target receive power received by the base station, $\alpha$ is a path loss compensation coefficient determined by the base station, $PL$ is a downlink path loss estimated by the user equipment, $\Delta(i)$ is an offset parameter for power control in subframe $i$, which, for example, may be equal to 0, $f(i)$ is a dynamic power adjustment value in subframe $i$, and when the user equipment uses the maximum transmit power of the user equipment to send a device-to-device signal, $f(i) = f(i-1)$ or $f(i) = 0$.

With reference to any one possible implementation manner of the first to the sixth possible implementation manners of the first aspect, in an eighth possible implementation manner of the first aspect, a format of the downlink control information is 0, 3, 3A, or 4.

With reference to any one possible implementation manner of the first to the sixth possible implementation manners of the first aspect, in a ninth possible implementation manner of the first aspect, a length of the downlink control information is the same as a length of downlink control information in a format of 0, 3, 3A, or 4.

With reference to the first aspect or any one possible implementation manner of the first to the seventh possible implementation manners of the first aspect, in a tenth possible implementation manner of the first aspect, the maximum transmit power of the user equipment is maximum transmit power $P_{CMAX}$ of the user equipment or nominal transmit power $P_{PowerClass}$ of the user equipment.

A second aspect provides a power control method, where the method includes: receiving, by user equipment, a transmit power control parameter sent by a base station; receiving, by the user equipment, an indication, which is sent by the base station, of using maximum transmit power of the user equipment to send a device-to-device signal; determining, by the user equipment, the maximum transmit power of the user equipment according to the transmit power control parameter and the indication; and using, by the user equipment, the maximum transmit power of the user equipment to send the device-to-device signal, the receiving, by the user equipment, an indication, which is sent by the base station, of using maximum transmit power of the user equipment to send a device-to-device signal includes: receiving, by the user equipment, downlink control information sent by the base station, where the downlink control information comprises a transmit power control command, the transmit power control command includes a dynamic power control index indicating the maximum transmit power of the user equipment and which is used to instruct the user equipment to use the maximum transmit power of the user equipment to send the device-to-device signal.

With reference to the first possible implementation manner of the second aspect, in a second possible implementation manner of the second aspect, the receiving, by the user equipment, an indication, which is sent by the base station, of using maximum transmit power of the user equipment to send a device-to-device signal further includes: receiving, by the user equipment, indication signaling sent by the base station, where the indication signaling carries a location of an indication bit in the downlink control information, where the indication bit is used to instruct the user equipment to use the maximum transmit power of the user equipment to send the device-to-device signal.

With reference to the first possible implementation manner of the second aspect, in a third possible implementation manner of the second aspect, the downlink control information includes a transmit power control command, where the transmit power control command is used to instruct the user equipment to use the maximum transmit power of the user equipment to send the device-to-device signal.

With reference to the first possible implementation manner of the second aspect, in a fourth possible implementation manner of the second aspect, the downlink control information includes a dynamic power control index, where the dynamic power control index is used to instruct the user equipment to use the maximum transmit power of the user equipment to send the device-to-device signal, and the dynamic power control index refers to a value of one or more bits.

With reference to the fourth possible implementation manner of the second aspect, in a fifth possible implementation manner of the second aspect, an indication value of the dynamic power control index is the greatest, or the dynamic power control index is newly added.

With reference to the second aspect, in a sixth possible implementation manner of the second aspect, the method further includes: calculating, by the user equipment, current transmit power $P(i)$ of the user equipment according to a formula $P(i) = \min\{P_{CMAX}(i), 10\log_{10}(M(i)) + P_o + \alpha \cdot PL + \Delta(i) + f(i)\}$, where i is a subframe number, $P_{CMAX}(i)$ is maximum transmit power of the user equipment in subframe $i$, $M(i)$ is frequency domain bandwidth allocated in subframe $i$, $P_o$ is target receive power received by the base station, $\alpha$ is a path loss compensation coefficient determined by the base station, $PL$ is a downlink path loss estimated by the user equipment, $\Delta(i)$ is an offset parameter for power control in subframe $i$, which, for example, may be equal to 0, $f(i)$ is a dynamic power adjustment value in subframe $i$, and when the user equipment uses the maximum transmit power of the user equipment to send a device-to-device signal, $f(i) = f(i-1)$ or $f(i) = 0$.

With reference to any one possible implementation manner of the first to the fifth possible implementation manners of the second aspect, in a seventh possible implementation manner of the second aspect, a format of the downlink control information is 0, 3, 3A, or 4.

With reference to any one possible implementation manner of the first to the fifth possible implementation manners of the second aspect, in an eighth possible implementation manner of the second aspect, a length of the downlink control information is the same as a length of downlink control information in a format of 0, 3, 3A, or 4.

With reference to the second aspect or any one possible implementation manner of the first to the sixth possible implementation manners of the second aspect, in a ninth possible implementation manner of the second aspect, the maximum transmit power of the user equipment is maximum transmit power $P_{CMAX}$ of the user equipment or nominal transmit power $P_{PowerClass}$ of the user equipment.

A third aspect provides a base station, including: a determining unit, configured to determine a transmit power control parameter, where the transmit power control parameter is used to determine maximum transmit power of user equipment; a sending unit, configured to send the transmit power control parameter to the user equipment; and an indication unit, configured to instruct the user equipment to use the maximum transmit power of the user equipment to send a device-to-device signal, the indication unit is specifically configured to send downlink control information to the user equipment, where the downlink control information comprises a transmit power control command, the transmit power control command includes a dynamic power control index indicating the maximum transmit power of the user equipment and which is used to instruct the user equipment to use the maximum transmit power of the user equipment to send the device-to-device signal.

With reference to the first possible implementation manner of the third aspect, in a second possible implementation manner of the third aspect, the indication unit is further configured to send indication signaling to the user equipment, where the indication signaling carries a location of an indication bit in the downlink control information, where the indication bit is used to instruct the user equipment to use the maximum transmit power of the user equipment to send the device-to-device signal.

With reference to the first possible implementation manner of the third aspect, in a third possible implementation manner of the third aspect, the downlink control information includes a transmit power control command, where the transmit power control command is used to instruct the user equipment to use the maximum transmit power of the user equipment to send the device-to-device signal.

With reference to the first possible implementation manner of the third aspect, in a fourth possible implementation manner of the third aspect, the downlink control information includes a dynamic power control index, where the dynamic power control index is used to instruct the user equipment to use the maximum transmit power of the user equipment to send the device-to-device signal, and the dynamic power control index refers to a value of one or more bits.

With reference to the fourth possible implementation manner of the third aspect, in a fifth possible implementation manner of the third aspect, an indication value of the dynamic power control index is the greatest.

With reference to the fourth possible implementation manner of the third aspect, in a sixth possible implementation manner of the third aspect, the dynamic power control index is newly added.

With reference to the third aspect, in a seventh possible implementation manner of the third aspect, the indication unit is specifically configured to instruct the user equipment to calculate current transmit power $P(i)$ of the user equipment according to a formula $P(i) = \min\{P_{CMAX}(i), 10\log_{10}(M(i)) + P_o + \alpha \cdot PL + \Delta(i) + f(i)\}$, where i is a subframe number, $P_{CMAX}(i)$ is maximum transmit power of the user equipment in subframe i, $M(i)$ is frequency domain bandwidth allocated in subframe i, $P_o$ is target receive power received by the base station, $\alpha$ is a path loss compensation coefficient determined by the base station, $PL$ is a downlink path loss estimated by the user equipment, $\Delta(i)$ is an offset parameter for power control in subframe i, which, for example, may be equal to 0, $f(i)$ is a dynamic power adjustment value in subframe i, and when the user equipment uses the maximum transmit power of the user equipment to send a device-to-device signal, $f(i) = f(i-1)$ or $f(i) = 0$.

With reference to any one possible implementation manner of the first to the sixth possible implementation manners of the third aspect, in an eighth possible implementation manner of the third aspect, a format of the downlink control information is 0, 3, 3A, or 4.

With reference to any one possible implementation manner of the first to the sixth possible implementation manners of the third aspect, in a ninth possible implementation manner of the third aspect, a length of the downlink control information is the same as a length of downlink control information in a format of 0, 3, 3A, or 4.

With reference to the third aspect or any one possible implementation manner of the first to the seventh possible implementation manners of the third aspect, in a tenth possible implementation manner of the third aspect, the maximum transmit power of the user equipment is maximum transmit power $P_{CMAX}$ of the user equipment or nominal transmit power $P_{PowerClass}$ of the user equipment.

A fourth aspect provides user equipment, where the user equipment includes: a receiving unit, configured to: receive a transmit power control parameter sent by a base station, where the transmit power control parameter is used to determine maximum transmit power of the user equipment; and receive an indication, which is sent by the base station, of using the maximum transmit power of the user equipment to send a device-to-device signal; a determining unit, configured to determine the maximum transmit power of the user equipment according to the transmit power control parameter and the indication; and a sending unit, configured to use the maximum transmit power of the user equipment to send the device-to-device signal, the receiving unit is specifically configured to receive downlink control information sent by the base station, where the downlink control information comprises a transmit power control command, the transmit power control command includes a dynamic power control index indicating the maximum transmit power of the user equipment and which is used to instruct the user equipment to use the maximum transmit power of the user equipment to send the device-to-device signal.

With reference to the first possible implementation manner of the fourth aspect, in a second possible implementation manner of the fourth aspect, the receiving unit is further configured to receive indication signaling sent by the base station, where the indication signaling carries a location of an indication bit in the downlink control information, where the indication bit is used to instruct the user equipment to use the maximum transmit power of the user equipment to send the device-to-device signal.

With reference to the first possible implementation manner of the fourth aspect, in a third possible implementation manner of the fourth aspect, the downlink control information includes a transmit power control command, where the transmit power control command is used to instruct the user equipment to use the maximum transmit power of the user equipment to send the device-to-device signal.

With reference to the first possible implementation manner of the fourth aspect, in a fourth possible implementation manner of the fourth aspect, the downlink control information includes a dynamic power control index, where the dynamic power control index is used to instruct the user equipment to use the maximum transmit power of the user equipment to send the device-to-device signal, and the dynamic power control index refers to a value of one or more bits.

With reference to the fourth possible implementation manner of the fourth aspect, in a fifth possible implementation manner of the fourth aspect, an indication value of the dynamic power control index is the greatest, or the dynamic power control index is newly added.

With reference to the fourth aspect, in a sixth possible implementation manner of the fourth aspect, the user equipment further includes: a calculating unit, configured to calculate current transmit power $P(i)$ of the user equipment according to a formula $P(i) = \min \{P_{CMAX}(i), 10\log_{10}(M(i)) + P_o + \alpha \cdot PL + \Delta(i) + f(i)\}$, where i is a subframe number, $P_{CMAX}(i)$ is maximum transmit power of the user equipment in subframe $i$, $M(i)$ is frequency domain bandwidth allocated in subframe $i$, $P_o$ is target receive power received by the base station, $\alpha$ is a path loss compensation coefficient determined by the base station, $PL$ is a downlink path loss estimated by the user equipment, $\Delta(i)$ is an offset parameter for power control in subframe $i$, which, for example, may be equal to 0, $f(i)$ is a dynamic power adjustment value in subframe $i$, and when the user equipment uses the maximum transmit power of the user equipment to send a device-to-device signal, $f(i) = f(i-1)$ or $f(i) = 0$.

With reference to any one possible implementation manner of the first to the fifth possible implementation manners of the fourth aspect, in a seventh possible implementation manner of the fourth aspect, a format of the downlink control information is 0, 3, 3A, or 4.

With reference to any one possible implementation manner of the first to the fifth possible implementation manners of the fourth aspect, in an eighth possible implementation manner of the fourth aspect, a length of the downlink control information is the same as a length of downlink control information in a format of 0, 3, 3A, or 4.

With reference to the fourth aspect and any one possible implementation manner of the first to the sixth possible implementation manners of the fourth aspect, in a ninth possible implementation manner of the fourth aspect, the maximum transmit power of the user equipment is maximum transmit power $P_{CMAX}$ of the user equipment or nominal transmit power $P_{PowerClass}$ of the user equipment.

In conclusion, according to the power control method, the base station, and the user equipment in the embodiments of the present invention, the user equipment can quickly acquire maximum transmit power when performing D2D communication in a mobile telecommunication system (such as an LTE system).

## BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a power control method according to an embodiment of the present invention;
FIG. 2 is a schematic diagram of another power control method according to an embodiment of the present invention;
FIG. 3 is a schematic block diagram of a base station according to an embodiment of the present invention;
FIG. 4 is a schematic block diagram of another base station according to an embodiment of the present invention;
FIG. 5 is a schematic block diagram of user equipment according to an embodiment of the present invention; and
FIG. 6 is a schematic block diagram of another user equipment according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that the technical solution of the present invention may be applied to a variety of communications systems, for example, a Global System for Mobile Communications (full English name: Global System for Mobile communication, GSM for short), a Code Division Multiple Access (full English name: Code Division Multiple Access, CDMA for short) system, a Wideband Code Division Multiple Access (Wideband Code Division Multiple Access, WCDMA for short) system, a general packet radio service (full English name: General Packet Radio Service, GPRS for short), an LTE system, a Long Term Evolution Advanced (full English name: Long Term Evolution Advanced, LTE-A for short) system, and a Universal Mobile Telecommunication System (full English name: Universal Mobile Telecommunication System, UMTS for short).

It should also be understood that, in the embodiments of the present invention, user equipment UE includes but is not limited to a mobile station (full English name: Mobile Station, MS for short), a mobile terminal (full English name: Mobile Terminal), a mobile phone (full English name: Mobile Telephone), a handset (full English name: handset), a portable equipment (full English name: portable equipment), and the like. The user equipment may communicate with one or more core networks through a radio access network (full English name: Radio Access Network, RAN for short). For example, the user equipment may be a mobile phone (or referred to as a "cellular" phone) or a computer having a wireless communication function, and the user equipment may further be a portable, pocket-sized, handheld, computer built-in or vehicle-mounted mobile apparatus.

In the embodiments of the present invention, a base station may be a base station (full English name: Base Transceiver Station, BTS for short) in GSM or CDMA, or a base station (NodeB) in WCDMA, or an evolved base station (full English name: evolved Node B, eNB or e-NodeB for short) in LTE, which is not limited by the embodiments of the present invention.

It should be understood that the user equipment in the embodiments of the present invention has a D2D communication function, that is, two user equipments can mutually perform D2D communication.

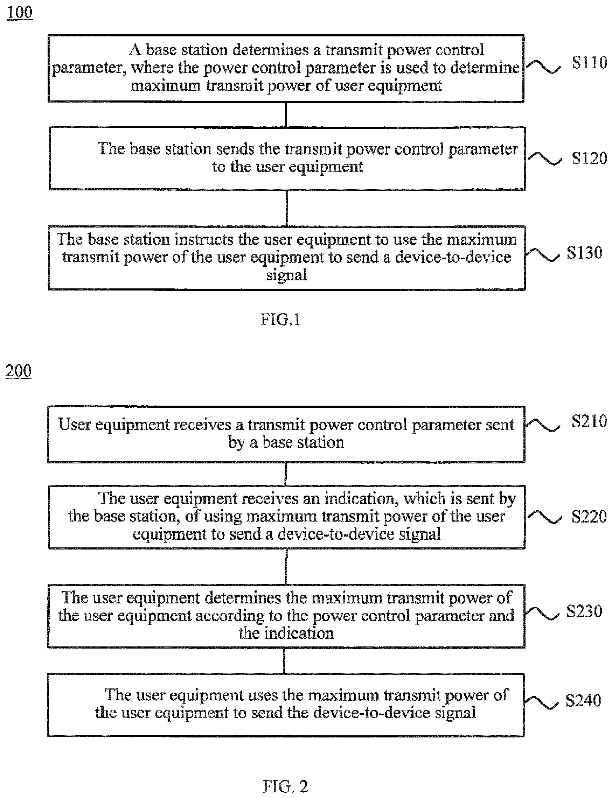

FIG. 1 shows a power control method 100, and the method 100 may be executed by, for example, a base station. As shown in FIG. 1, the method 100 includes:

S110: A base station determines a transmit power control parameter, where the transmit power control parameter is used to determine maximum transmit power of user equipment.

It should be noted that, in a Long Term Evolution (full English name: Long Term Evolution, LTE for short) system, current transmit power $P(i)$ of the user equipment is generally determined by using the following formula:

$$P(i) = \min\{P_{\text{CMAX}}(i), 10\log_{10}(M(i)) + P_O + \alpha \cdot PL + \Delta(i) + f(i)\} \qquad (1)$$

where i is a subframe number, $P_{\text{CMAX}}(i)$ is maximum transmit power of the user equipment in subframe $i$, $M(i)$ is frequency domain bandwidth allocated in subframe $i$, $P_O$ is target receive power received by the base station, $\alpha$ is a path loss compensation coefficient determined by the base station, $PL$ is a downlink path loss estimated by the user equipment, $\Delta(i)$ is an offset parameter for power control in subframe $i$, which, for example, may be equal to 0, and $f(i)$ is a dynamic power adjustment value in subframe $i$.

Therefore, to determine the current transmit power $P(i)$ of the user equipment, the base station needs to determine at least transmit power control parameters, such as $P_O$, $\alpha$, and $f(i)$. The maximum transmit power of the user equipment may be a specific numerical value determined by the base station, or may be a variable requiring calculation, such as current transmit power $P(i)$ of the user equipment, maximum transmit power $P_{\text{CMAX}}$ of the user equipment, or nominal transmit power $P_{\text{PowerClass}}$ of the user equipment.

S120: The base station sends the transmit power control parameter to the user equipment.

It should be noted that the base station may adopt multiple methods to send the transmit power control parameter to the user equipment, which does not constitute a limitation herein.

S130: The base station instructs the user equipment to use the maximum transmit power of the user equipment to send a device-to-device (full English name: Device to Device, D2D for short) signal.

It should be noted that the device-to-device signal is a signal used when the user equipment performs D2D communication, including a user equipment discovery signal, a data signal, and the like. The base station may adopt multiple methods to instruct the user equipment to use the maximum transmit power of the user equipment to send the

6

signal, which does not constitute a limitation herein.

It should be understood that sequence numbers of the foregoing processes do not mean execution order in various embodiments of the present invention. The execution order of the processes should be determined according to functions and internal logic of the processes, and should not be construed as any limitation on the implementation processes of the embodiments of the present invention.

The above describes the power control method according to this embodiment of the present invention in detail with reference to FIG. 1.

This embodiment of the present invention is further described in detail in the following with reference to specific examples. It should be noted that the examples in FIG 1 are merely intended to help a person skilled in the art to better understand this embodiment of the present invention rather than to limit this embodiment of the present invention to a specific numerical value or a specific scenario shown in the examples. A person skilled in the art can obviously make various equivalent modifications or variations according to the given examples in FIG. 1. These modifications or variations shall fall within the scope of this embodiment of the present invention.

According to this embodiment of the present invention, that the base station instructs the user equipment to use the maximum transmit power of the user equipment to send a device-to-device signal includes that: the base station sends downlink control information to the user equipment, where the downlink control information (full English name: Downlink Control Information, DCI for short) is used to instruct the user equipment to use the maximum transmit power of the user equipment to send the device-to-device signal.

Optionally, that the base station instructs the user equipment to use the maximum transmit power of the user equipment to send a device-to-device signal further includes that:

the base station sends indication signaling to the user equipment, where the indication signaling carries a location of an indication bit in the downlink control information, where the indication bit is used to instruct the user equipment to use the maximum transmit power of the user equipment to send the device-to-device signal.

It should be noted that, in a current LTE system, for example, in DCI format 3 or DCI format 3A, indication bits of multiple user equipments are included. The system may configure an indication bit corresponding to the user equipment by using radio resource control (full English name: Radio Resource Control, RRC for short) signaling. For current RRC configuration signaling, reference is made to Table 1A.

**Table 1A**

```
-- ASN1START
TPC-PDCCH-Config ::=                CHOICE {
  release                            NULL,
  setup                              SEQUENCE {
     tpc-RNTI                        BIT STRING (SIZE (16)),
     tpc-Index                       TPC-Index
     }
}
     TPC-Index ::=                   CHOICE {
  indexOfFormat3                      INTEGER (1..15),
  indexOfFormat3A                     INTEGER (1..31)
}
   -- ASN1STOP
```

A tpc-Index-D2D variable of a TPC-Index type is added to Table 1A to indicate a location of an indication bit that carries the maximum transmit power of the user equipment and is in the downlink control information, so that the user equipment can use the maximum transmit power of the user equipment to send a device-to-device signal. For modified RRC configuration signaling, reference is made to Table IB.

**Table 1B**

```
-- ASN1START
TPC-PDCCH-Config ::=                     CHOICE {
  release                                  NULL,
  setup                                    SEQUENCE {
      tpc-RNTI                             BIT STRING (SIZE (16)),
      tpc-Index                            TPC-Index
      tpc-Index-D2D                            TPC-Index
      }
}
      TPC-Index ::=                      CHOICE {
  indexOfFormat3                           INTEGER (1..15),
  } indexOfFormat3A                        INTEGER (1..31)
  -- ASN1STOP
```

Optionally, the downlink control information includes a transmit power control (full English name: Transmit Power Control, TPC for short) command, where the transmit power control command is used to instruct the user equipment to use the maximum transmit power of the user equipment to send the device-to-device signal.

It should be noted that the dynamic power adjustment value $f(i)$ in formula (1) is adjusted according to a TPC command, namely a dynamic power increment $\delta$, in DCI, for example, in format 0/3/3A/4.

Power control in an LTE system is categorized into two types: accumulated (Accumulated) power control and absolute (Absolute) power control.

For accumulated power control, a calculation formula for the dynamic power adjustment value $f(i)$ is:

$$f(i) = f(i-1) + \delta \qquad (2)$$

The dynamic power increment $\delta$ is determined by the base station and obtained by means of table lookup. A table of the dynamic power increment $\delta$ is as follows:

**Table 1**

| TPC command field in DCI format 0/3/4 | $\delta$ [dB] |
|---|---|
| 0 | -1 |
| 1 | 0 |
| 2 | 1 |
| 3 | 3 |

**Table 2**

| TPC command field in DCI format 3A | $\delta$ [dB] |
|---|---|
| 0 | -1 |
| 1 | 1 |

For subframe $i$, if the user equipment does not receive a power control signaling indication from the base station, or the user equipment enters a discontinuous reception (full English name: Discontinuous Reception, DRX for short) state, or the subframe is not an uplink subframe in a Time Division Duplexing (Time Division Duplexing, TDD for short) system, $\delta = 0$.

For absolute power control, a calculation formula for the dynamic power adjustment value $f(i)$ is:

$$f(i) = \delta \qquad (3)$$

The dynamic power increment $\delta$ is determined by the base station and obtained by means of table lookup. A table of the dynamic power increment $\delta$ is as follows:

**Table 3**

| TPC command field in DCI format 0/3/4 | $\delta$ [dB] only in DCI format 0/4 |
|---|---|
| 0 | -4 |
| 1 | -1 |
| 2 | 1 |
| 3 | 4 |

For subframe *i,* if the user equipment does not receive a power control signaling indication from the base station, or the user equipment enters a discontinuous reception (full English name: Discontinuous Reception, DRX for short) state, or the subframe is not an uplink subframe in a Time Division Duplexing (Time Division Duplexing, TDD for short) system, $f(i) = f(i-1)$.

Optionally, the downlink control information includes a dynamic power control index, where the dynamic power control index is used to instruct the user equipment to use the maximum transmit power of the user equipment to send the device-to-device signal. For example, an indication value of any dynamic power control index in the transmit power control command in the downlink control information is changed to the maximum transmit power of the user equipment, to instruct the user equipment to use the maximum transmit power of the user equipment to send the device-to-device signal, where the dynamic power control index refers to a value of one or more bits, such as 0, 1, 2, or 3 in the TPC command field in Table 1 and Table 3, and 0 or 1 in the TPC command field in Table 2.

It should be noted that, for example, for accumulated power control, an indication value of any dynamic power control index, such as 0, 1, 2, or 3, in the TPC command field in DCI format 0/3/4 in Table 1 may be changed to the maximum transmit power of the user equipment, that is, a value of a dynamic power increment $\delta$ corresponding to a related dynamic power control index is replaced with the maximum transmit power of the user equipment.

For example, for accumulated power control, an indication value of any dynamic power control index, such as 0 or 1, in the TPC command field in DCI format 3A in Table 2 may be changed to the maximum transmit power of the user equipment, that is, a value of a dynamic power increment $\delta$ corresponding to a related dynamic power control index is replaced with the maximum transmit power of the user equipment.

For example, for absolute power control, an indication value of any dynamic power control index, such as 0, 1, 2, or 3, in the TPC command field in DCI format 0/3/4 in Table 3 may be changed to the maximum transmit power of the user equipment, that is, a value of a dynamic power increment $\delta$ corresponding to a related dynamic power control index is replaced with the maximum transmit power of the user equipment.

It should be noted that the maximum transmit power of the user equipment may be a specific numerical value, or may be a variable requiring calculation and determining by the user equipment, such as the current transmit power $P(i)$ of the user equipment, the maximum transmit power $P_{CMAX}$ of the user equipment, or the nominal transmit power $P_{PowerClass}$ of the user equipment, or the like.

Optionally, an indication value of the dynamic power control index is the greatest, for example, an indication value of a dynamic power control index that is in the transmit power control command in the downlink control information and indicates a step of a maximum dynamic power increment, that is, an indication value of a dynamic power control index that has a greatest indication value, is changed to the maximum transmit power of the user equipment.

It should be noted that, for example, for accumulated power control, an indication value of dynamic power control index 3 in the TPC command field in DCI format 0/3/4 in Table 1 may be changed to the maximum transmit power of the user equipment, that is, a dynamic power increment $\delta=3$ corresponding to a related dynamic power control index is replaced with the maximum transmit power of the user equipment. Refer to Table 4.

**Table 4**

| TPC command field in DCI format 0/3/4 | $\delta$ [dB] |
|---|---|
| 0 | -1 |
| 1 | 0 |
| 2 | 1 |
| 3 | Maximum transmit power |

For example, for accumulated power control, an indication value of dynamic power control index 1 in the TPC command field in DCI format 3A in Table 2 may be changed to the maximum transmit power of the user equipment, that is, a dynamic power increment $\delta$=1 corresponding to a related dynamic power control index is replaced with the maximum transmit power of the user equipment. Refer to Table 5.

**Table 5**

| TPC command field in DCI format 3A | $\delta$ [dB] |
|---|---|
| 0 | -1 |
| 1 | Maximum transmit power |

For example, for absolute power control, an indication value of dynamic power control index 3 in the TPC command field in DCI format 0/3/4 in Table 3 may be changed to the maximum transmit power of the user equipment, that is, a dynamic power increment $\delta$=4 corresponding to a related dynamic power control index is replaced with the maximum transmit power of the user equipment. Refer to Table 6.

**Table 6**

| TPC command field in DCI format 0/3/4 | $\delta$ [dB] only in DCI format 0/4 |
|---|---|
| 0 | -4 |
| 1 | -1 |
| 2 | 1 |
| 3 | Maximum transmit power |

Optionally, the dynamic power control index is newly added. For example, a dynamic power control index indicating the maximum transmit power of the user equipment is added to the transmit power control command in the downlink control information, to instruct the user equipment to use the maximum transmit power of the user equipment to send the device-to-device signal, where the dynamic power control index refers to a value of one or more bits.

It should be noted that, for example, for accumulated power control, dynamic power control index 4 in the TPC command field in DCI format 0/3/4 may be added to Table 1 to indicate the maximum transmit power of the user equipment. Refer to Table 7.

**Table 7**

| TPC command field in DCI format 0/3/4 | $\delta$ [dB] |
|---|---|
| 0 | -1 |
| 1 | 0 |
| 2 | 1 |
| 3 | 3 |
| 4 | Maximum transmit power |

For example, for accumulated power control, dynamic power control index 2 in the TPC command field in DCI format 3A may be added to Table 2 to indicate the maximum transmit power of the user equipment. Refer to Table 8.

**Table 8**

| TPC command field in DCI format 3A | $\delta$ [dB] |
|---|---|
| 0 | -1 |
| 1 | +1 |
| 2 | Maximum transmit power |

For example, for absolute power control, dynamic power control index 4 in the TPC command field in DCI format 0/3/4 may be added to Table 3 to indicate the maximum transmit power of the user equipment. Refer to Table 9.

**Table 9**

| TPC command field in DCI format 0/3/4 | $\delta$[dB] only in DCI format 0/4 |
|---|---|
| 0 | -4 |
| 1 | -1 |
| 2 | 1 |
| 3 | +4 |
| 4 | Maximum transmit power |

Optionally, the method further includes that: the base station instructs the user equipment to calculate current transmit power $P(i)$ of the user equipment according to formula (1), and when the user equipment uses the maximum transmit power of the user equipment to send a device-to-device signal, $f(i) = f(i-1)$ or $f(i) = 0$.

Therefore, according to the power control method provided by this embodiment of the present invention, user equipment can quickly acquire maximum transmit power, and can quickly lower transmit power of the user equipment after a signal is transmitted by using the maximum transmit power, which can lower communication interference on a base station or another user equipment.

Optionally, a format of the downlink control information is 0, 3, 3A, or 4; or
a length of the downlink control information is the same as a length of downlink control information in a format of 0, 3, 3A, or 4.

Optionally, the maximum transmit power of the user equipment is maximum transmit power $P_{CMAX}$ of the user equipment or nominal transmit power $P_{PowerClass}$ of the user equipment.

Therefore, according to the power control method provided by this embodiment of the present invention, user equipment can quickly acquire maximum transmit power.

The foregoing describes the power control method in this embodiment of the present invention in detail from the perspective of a base station with reference to FIG. 1, and the following describes the power control method in this embodiment of the present invention from the perspective of user equipment with reference to FIG. 2. FIG 2 is described from the perspective of user equipment serving as a sending terminal. It should be noted that the user equipment may serve as a sending terminal or a receiving terminal.

FIG. 2 shows another power control method 200 according to an embodiment of the present invention, and the method 200 includes:

S210: User equipment receives a transmit power control parameter sent by a base station.

It should be noted that, in a Long Term Evolution (full English name: Long Term Evolution, LTE for short) system, current transmit power $P(i)$ of the user equipment is determined by using formula (1); therefore, to determine the current transmit power $P(i)$ of the user equipment, the user equipment needs to receive at least transmit power control parameters, such as $P_o$, $\alpha$, and $f(i)$, determined by the base station.

S220: The user equipment receives an indication, which is sent by the base station, of using maximum transmit power of the user equipment to send a device-to-device signal.

It should be noted that the base station may adopt multiple methods to receive the indication, which is sent by the base station, of using the maximum transmit power of the user equipment to send the D2D signal, which does not constitute a limitation herein.

S230: The user equipment determines the maximum transmit power of the user equipment according to the transmit power control parameter and the indication.

It should be noted that the maximum transmit power of the user equipment may be a specific numerical value determined by the base station, or may be a variable requiring calculation, such as the current transmit power $P(i)$ of the user equipment, maximum transmit power $P_{CMAX}$ of the user equipment, or nominal transmit power $P_{PowerClass}$ of the user equipment, which does not constitute a limitation herein.

S240: The user equipment uses the maximum transmit power of the user equipment to send the device-to-device (full English name: Device to Device, D2D for short) signal.

The above describes the power control method according to this embodiment of the present invention in detail with reference to FIG. 2.

This embodiment of the present invention is further described in detail in the following with reference to specific examples. It should be noted that the examples in FIG. 2 are merely intended to help a person skilled in the art to better understand this embodiment of the present invention rather than to limit this embodiment of the present invention to a specific numerical value or a specific scenario shown in the examples. A person skilled in the art can obviously make various equivalent modifications or variations according to the given examples in FIG. 2. These modifications or variations shall fall within the scope of this embodiment of the present invention.

According to this embodiment of the present invention, that the user equipment receives an indication, which is sent by the base station, of using maximum transmit power of the user equipment to send a device-to-device signal includes that:

the user equipment receives downlink control information sent by the base station, where the downlink control information is used to instruct the user equipment to use the maximum transmit power of the user equipment to send the device-to-device signal.

Optionally, that the user equipment receives an indication, which is sent by the base station, of using maximum transmit power of the user equipment to send a device-to-device signal further includes that:

the user equipment receives indication signaling sent by the base station, where the indication signaling carries a location of an indication bit in the downlink control information, where the indication bit is used to instruct the user equipment to use the maximum transmit power of the user equipment to send the device-to-device signal.

Optionally, the downlink control information includes a transmit power control command, where the transmit power control command is used to instruct the user equipment to use the maximum transmit power of the user equipment to send the device-to-device signal.

Optionally, the downlink control information includes a dynamic power control index, where the dynamic power control index is used to instruct the user equipment to use the maximum transmit power of the user equipment to send the device-to-device signal, and the dynamic power control index refers to a value of one or more bits.

Optionally, an indication value of the dynamic power control index is the greatest, or the dynamic power control index is newly added.

Optionally, the method further includes that: the base station instructs the user equipment to calculate current transmit power $P(i)$ of the user equipment according to formula (1), and when the user equipment uses the maximum transmit power of the user equipment to send a device-to-device signal, $f(i) = f(i - 1)$ or $f(i) = 0$.

Therefore, according to the power control method provided by this embodiment of the present invention, user equipment can quickly acquire maximum transmit power, and can quickly lower transmit power of the user equipment after a signal is transmitted by using the maximum transmit power, which can lower communication interference on a base station or another user equipment.

Optionally, a format of the downlink control information is 0, 3, 3A, or 4, or a length of the downlink control information is the same as a length of downlink control information in a format of 0, 3, 3A, or 4.

Optionally, the maximum transmit power of the user equipment is maximum transmit power $P_{CMAX}$ of the user equipment or nominal transmit power $P_{PowerClass}$ of the user equipment.

Therefore, according to the power control method provided by this embodiment of the present invention, user equipment can quickly acquire maximum transmit power.

It should be understood that sequence numbers of the foregoing processes do not mean execution order in various embodiments of the present invention. The execution order of the processes should be determined according to functions and internal logic of the processes, and should not be construed as any limitation on the implementation processes of the embodiments of the present invention.

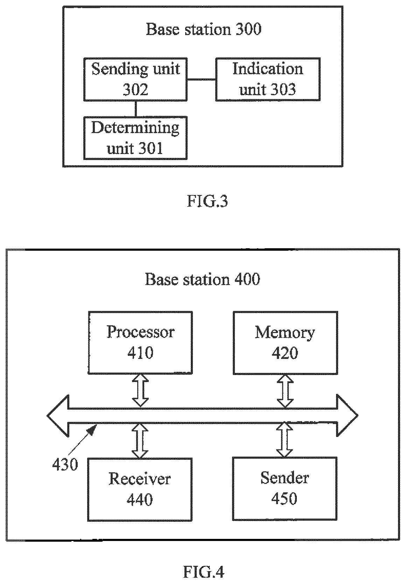

The above describes the power control methods in detail according to the embodiments of the present invention with reference to FIG. 1 to FIG. 2, and the following describes a base station and user equipment in detail according to embodiments of the present invention with reference to FIG. 3 to FIG. 6.

FIG. 3 shows a schematic block diagram of a base station 300 according to an embodiment of the present invention. As shown in FIG. 3, the base station 300 includes a determining unit 301, a sending unit 302, and an indication unit 303.

The determining unit 301 is configured to determine a transmit power control parameter, where the transmit power control parameter is used to determine maximum transmit power of user equipment.

It should be noted that, in a Long Term Evolution (full English name: Long Term Evolution, LTE for short) system, current transmit power $P(i)$ of the user equipment is determined by using formula (1); therefore, to determine the current transmit power $P(i)$ of the user equipment, the base station needs to determine at least transmit power control parameters, such as $P_o$, $\alpha$, and $f(i)$. The maximum transmit power of the user equipment may be a specific numerical value determined by the base station, or may be a variable requiring calculation, such as current transmit power $P(i)$ of the user equipment, maximum transmit power $P_{CMAX}$ of the user equipment, or nominal transmit power $P_{PowerClass}$ of the user equipment.

The sending unit 302 is configured to send the transmit power control parameter to the user equipment.

It should be noted that the base station may adopt multiple methods to send the transmit power control parameter to the user equipment, which does not constitute a limitation herein.

The indication unit 303 is configured to instruct the user equipment to use the maximum transmit power of the user equipment to send a device-to-device (full English name: Device to Device, D2D for short) signal.

It should be noted that the base station may adopt multiple methods to instruct the user equipment to use the maximum transmit power of the user equipment to send the device-to-device signal, which does not constitute a limitation herein.

The above describes the base station according to this embodiment of the present invention in detail with reference to FIG. 3.

This embodiment of the present invention is further described in detail in the following with reference to specific examples. It should be noted that the examples in FIG. 3 are merely intended to help a person skilled in the art to better understand this embodiment of the present invention rather than to limit this embodiment of the present invention to a specific numerical value or a specific scenario shown in the examples. A person skilled in the art can obviously make various equivalent modifications or variations according to the given examples in FIG. 3. These modifications or variations shall fall within the scope of this embodiment of the present invention.

According to this embodiment of the present invention, the indication unit 303 is specifically configured to send downlink control information to the user equipment, where the downlink control information (full English name: Downlink Control Information, DCI for short) is used to instruct the user equipment to use the maximum transmit power of the user equipment to send the device-to-device signal.

Optionally, the indication unit 303 is further configured to send indication signaling to the user equipment, where the indication signaling carries a location of an indication bit in the downlink control information, where the indication bit is used to instruct the user equipment to use the maximum transmit power of the user equipment to send the device-to-device signal.

Optionally, the downlink control information includes a transmit power control command, where the transmit power control command is used to instruct the user equipment to use the maximum transmit power of the user equipment to send the device-to-device signal.

It should be noted that the dynamic power adjustment value $f(i)$ in formula (1) is adjusted according to a TPC command, namely a dynamic power increment $\delta$, in DCI format 0/3/3A/4.

Power control in an LTE system is categorized into two types: accumulated (Accumulated) power control and absolute (Absolute) power control.

For accumulated power control, a calculation formula for the dynamic power control value $f(i)$ is formula (2), where the dynamic power increment $\delta$ is determined by the base station and obtained by means of table lookup. For tables of the dynamic power increment $\delta$, reference is made to Table 1 and Table 2.

For subframe $i$, if the user equipment does not receive a power control signaling indication from the base station, or the user equipment enters a discontinuous reception (full English name: Discontinuous Reception, DRX for short) state, or the subframe is not an uplink subframe in a Time Division Duplexing (Time Division Duplexing, TDD for short) system, $\delta = 0$.

For absolute power control, a calculation formula for the dynamic power control value $f(i)$ is formula (3), where the dynamic power increment $\delta$ is determined by the base station and obtained by means of table lookup. For a table of the dynamic power increment $\delta$, reference is made to Table 3.

For subframe $i$, if the user equipment does not receive a power control signaling indication from the base station, or the user equipment enters a discontinuous reception (full English name: Discontinuous Reception, DRX for short) state, or the subframe is not an uplink subframe in a Time Division Duplexing (Time Division Duplexing, TDD for short) system, $f(i) = f(i-1)$.

It should be noted that the base station may adopt multiple methods to use a transmit power control TPC command in format 0/3/3A/4 of the downlink control information DCI to instruct the user equipment to use the maximum transmit power of the user equipment to send the signal, which does not constitute a limitation herein.

Optionally, the downlink control information includes a dynamic power control index, where the dynamic power control index is used to instruct the user equipment to use the maximum transmit power of the user equipment to send the device-to-device signal. For example, an indication value of any dynamic power control index in the transmit power control command in the downlink control information is changed to the maximum transmit power of the user equipment, to instruct the user equipment to use the maximum transmit power of the user equipment to send the device-to-device signal, where the dynamic power control index refers to a value of one or more bits, such as 0, 1, 2, or 3 in the TPC command field in Table 1 and Table 3, and 0 or 1 in the TPC command field in Table 2.

It should be noted that, for example, for accumulated power control, an indication value of any dynamic power control index, such as 0, 1, 2, or 3, in the TPC command field in DCI format 0/3/4 in Table 1 may be changed to the maximum transmit power of the user equipment, that is, a value of a dynamic power increment $\delta$ corresponding to a related dynamic power control index is replaced with the maximum transmit power of the user equipment.

For example, for accumulated power control, an indication value of any dynamic power control index, such as 0 or 1, in the TPC command field in DCI format 3A in Table 2 may be changed to the maximum transmit power of the user equipment, that is, a value of a dynamic power increment $\delta$ corresponding to a related dynamic power control index is replaced with the maximum transmit power of the user equipment.

For example, for absolute power control, an indication value of any dynamic power control index, such as 0, 1, 2, or 3, in the TPC command field in DCI format 0/3/4 in Table 3 may be changed to the maximum transmit power of the user equipment, that is, a value of a dynamic power increment $\delta$ corresponding to a related dynamic power control index is replaced with the maximum transmit power of the user equipment.

Optionally, an indication value of the dynamic power control index is the greatest. For example, an indication value of a dynamic power control index that is in the transmit power control command in the downlink control information and indicates a step of a maximum dynamic power increment, that is, an indication value of a dynamic power control index that has a greatest indication value, is changed to the maximum transmit power of the user equipment, to instruct the user equipment to use the maximum transmit power of the user equipment to send the device-to-device signal.

It should be noted that, for example, for accumulated power control, an indication value of dynamic power control index 3 in the TPC command field in DCI format 0/3/4 in Table 1 may be changed to the maximum transmit power of the user equipment, that is, a dynamic power increment $\delta$=3 corresponding to a related dynamic power control index is replaced with the maximum transmit power of the user equipment. Refer to Table 4.

For example, for accumulated power control, an indication value of dynamic power control index 1 in the TPC command field in DCI format 3A in Table 2 may be changed to the maximum transmit power of the user equipment, that is, a dynamic power increment $\delta$=1 corresponding to a related dynamic power control index is replaced with the maximum transmit power of the user equipment. Refer to Table 5.

For example, for absolute power control, an indication value of dynamic power control index 3 in the TPC command field in DCI format 0/3/4 in Table 3 is changed to the maximum transmit power of the user equipment, that is, a dynamic power increment $\delta$=4 corresponding to a related dynamic power control index is replaced with the maximum transmit power of the user equipment. Refer to Table 6.

Optionally, the dynamic power control index is newly added. For example, a dynamic power control index indicating the maximum transmit power of the user equipment is added to the transmit power control command in the downlink control information, to instruct the user equipment to use the maximum transmit power of the user equipment to send the device-to-device signal, where the dynamic power control index refers to a value of one or more bits.

It should be noted that, for example, for accumulated power control, dynamic power control index 4 in the TPC command field in DCI format 0/3/4 may be added to Table 1 to indicate the maximum transmit power of the user equipment. Refer to Table 7.

For example, for accumulated power control, dynamic power control index 2 in the TPC command field in DCI format 3A may be added to Table 2 to indicate the maximum transmit power of the user equipment. Refer to Table 8.

For example, for absolute power control, dynamic power control index 4 in the TPC command field in DCI format 0/3/4 may be added to Table 3 to indicate the maximum transmit power of the user equipment. Refer to Table 9.

Optionally, the indication unit 303 is specifically configured to instruct the user equipment to calculate current transmit power $P(i)$ of the user equipment according to formula (1), and when the user equipment uses the maximum transmit power of the user equipment to send a device-to-device signal, $f(i) = f(i$-1$)$ or $f(i) = 0$.

Therefore, according to the base station provided by this embodiment of the present invention, user equipment can quickly acquire maximum transmit power, and can quickly lower transmit power of the user equipment after a signal is transmitted by using the maximum transmit power, which can lower communication interference on the base station or another user equipment.

Optionally, a format of the downlink control information is 0, 3, 3A, or 4, or a length of the downlink control information is the same as a length of downlink control information in a format of 0, 3, 3A, or 4.

Optionally, the maximum transmit power of the user equipment is maximum transmit power $P_{\text{CMAX}}$ of the user equipment or nominal transmit power $P_{\text{PowerClass}}$ of the user equipment.

Therefore, according to the base station provided by this embodiment of the present invention, user equipment can quickly acquire maximum transmit power.

In another implementation manner, as shown in FIG. 4, an embodiment of the present invention further provides a base station 400, where the base station 400 includes a processor 410, a memory 420, a bus system 430, a receiver 440, and a sender 450. The processor 410, the memory 420, the receiver 440, and the sender 450 are connected by using the bus system 430. The memory 420 is configured to store an instruction. The processor 410 is configured to execute the instruction stored in the memory 420 to control the receiver 440 to receive a signal, an instruction, or a message, and control the sender 450 to send a signal, signaling, a message, or the like. The processor 410 is configured to determine a transmit power control parameter, where the transmit power control parameter is used to determine maximum transmit power of user equipment and instruct the user equipment to use the maximum transmit power of the user equipment to send a device-to-device signal. The sender 450 is configured to send the transmit power control parameter determined by the processor 410 to the user equipment.

It should be noted that, in a Long Term Evolution (full English name: Long Term Evolution, LTE for short) system, current transmit power $P(i)$ of the user equipment is determined by using formula (1); therefore, to determine the current transmit power $P(i)$ of the user equipment, the base station needs to determine at least transmit power control parameters, such as $P_O$, $\alpha$, and $f(i)$. The maximum transmit power of the user equipment may be a specific numerical value determined by the base station, or may be a variable requiring calculation, such as current transmit power $P(i)$ of the user equipment, maximum transmit power $P_{CMAX}$ of the user equipment, or nominal transmit power $P_{PowerClass}$ of the user equipment.

The above describes the base station according to this embodiment of the present invention in detail with reference to FIG. 4.

This embodiment of the present invention is further described in detail in the following with reference to specific examples. It should be noted that the examples in FIG. 4 are merely intended to help a person skilled in the art to better understand this embodiment of the present invention rather than to limit this embodiment of the present invention to a specific numerical value or a specific scenario shown in the examples. A person skilled in the art can obviously make various equivalent modifications or variations according to the given examples in FIG. 4. These modifications or variations shall fall within the scope of this embodiment of the present invention.

According to this embodiment of the present invention, the processor 410 sends downlink control information to the user equipment, where the downlink control information (full English name: Downlink Control Information, DCI for short) is used to instruct the user equipment to use the maximum transmit power of the user equipment to send the device-to-device signal.

Optionally, the sender 450 sends indication signaling to the user equipment, where the indication signaling carries a location of an indication bit in the downlink control information, where the indication bit is used to instruct the user equipment to use the maximum transmit power of the user equipment to send the device-to-device signal.

Optionally, the downlink control information includes a transmit power control command, where the transmit power control command is used to instruct the user equipment to use the maximum transmit power of the user equipment to send the device-to-device signal.

It should be noted that the dynamic power adjustment value $f(i)$ in formula (1) is adjusted according to a TPC command, namely a dynamic power increment $\delta$, in DCI format 0/3/3A/4.

Power control in an LTE system is categorized into two types: accumulated (Accumulated) power control and absolute (Absolute) power control.

For accumulated power control, a calculation formula for the dynamic power control value $f(i)$ is formula (2), where the dynamic power increment $\delta$ is determined by the base station and obtained by means of table lookup. For tables of the dynamic power increment $\delta$, reference is made to Table 1 and Table 2.

For subframe $i$, if the user equipment does not receive a power control signaling indication from the base station, or the user equipment enters a discontinuous reception (full English name: Discontinuous Reception, DRX for short) state, or the subframe is not an uplink subframe in a Time Division Duplexing (Time Division Duplexing, TDD for short) system, $\delta = 0$.

For absolute power control, a calculation formula for the dynamic power control value $f(i)$ is formula (3), where the dynamic power increment $\delta$ is determined by the base station and obtained by means of table lookup. For a table of the dynamic power increment $\delta$, reference is made to Table 3.

For subframe $i$. if the user equipment does not receive a power control signaling indication from the base station, or the user equipment enters a discontinuous reception (full English name: Discontinuous Reception, DRX for short) state, or the subframe is not an uplink subframe in a Time Division Duplexing (Time Division Duplexing, TDD for short) system, $f(i) = f(i-1)$.

It should be noted that the base station may adopt multiple methods to use a transmit power control TPC command in format 0/3/3A/4 of the downlink control information DCI to instruct the user equipment to use the maximum transmit power of the user equipment to send the device-to-device signal, which does not constitute a limitation herein.

Optionally, the downlink control information includes a dynamic power control index, where the dynamic power control index is used to instruct the user equipment to use the maximum transmit power of the user equipment to send the device-to-device signal, and the dynamic power control index refers to a value of one or more bits, such as 0, 1, 2, or 3 in the TPC command field in Table 1 and Table 3, and 0 or 1 in the TPC command field in Table 2.

It should be noted that, for example, for accumulated power control, an indication value of any dynamic power control index, such as 0, 1, 2, or 3, in the TPC command field in DCI format 0/3/4 in Table 1 may be changed to the maximum transmit power of the user equipment, that is, a value of a dynamic power increment $\delta$ corresponding to a related dynamic power control index is replaced with the maximum transmit power of the user equipment.

For example, for accumulated power control, an indication value of any dynamic power control index, such as 0 or 1, in the TPC command field in DCI format 3A in Table 2 may be changed to the maximum transmit power of the user equipment, that is, a value of a dynamic power increment $\delta$ corresponding to a related dynamic power control index is replaced with the maximum transmit power of the user equipment.

For example, for absolute power control, an indication value of any dynamic power control index, such as 0, 1, 2, or 3, in the TPC command field in DCI format 0/3/4 in Table 3 may be changed to the maximum transmit power of the user equipment, that is, a value of a dynamic power increment $\delta$ corresponding to a related dynamic power control index is replaced with the maximum transmit power of the user equipment.

Optionally, an indication value of the dynamic power control index is the greatest. For example, an indication value of a dynamic power control index that is in the transmit power control command in the downlink control information and indicates a step of a maximum dynamic power increment, that is, an indication value of a dynamic power control index that has a greatest indication value, is changed to the maximum transmit power of the user equipment, to use the maximum transmit power of the user equipment to send the device-to-device signal.

It should be noted that, for example, for accumulated power control, an indication value of dynamic power control index 3 in the TPC command field in DCI format 0/3/4 in Table 1 may be changed to the maximum transmit power of the user equipment, that is, a dynamic power increment $\delta$=3 corresponding to a related dynamic power control index is replaced with the maximum transmit power of the user equipment. Refer to Table 4.

For example, for accumulated power control, an indication value of dynamic power control index 1 in the TPC command field in DCI format 3A in Table 2 may be changed to the maximum transmit power of the user equipment, that is, a dynamic power increment $\delta$=1 corresponding to a related dynamic power control index is replaced with the maximum transmit power of the user equipment. Refer to Table 5.

For example, for absolute power control, an indication value of dynamic power control index 3 in the TPC command field in DCI format 0/3/4 in Table 3 may be changed to the maximum transmit power of the user equipment, that is, a dynamic power increment $\delta$=4 corresponding to a related dynamic power control index is replaced with the maximum transmit power of the user equipment. Refer to Table 6.

Optionally, the dynamic power control index is newly added, for example, a dynamic power control index indicating the maximum transmit power of the user equipment is added to the transmit power control command in the downlink control information, where the dynamic power control index refers to a value of one or more bits.

It should be noted that, for example, for accumulated power control, dynamic power control index 4 in the TPC command field in DCI format 0/3/4 may be added to Table 1 to indicate the maximum transmit power of the user equipment. Refer to Table 7.

For example, for accumulated power control, dynamic power control index 2 in the TPC command field in DCI format 3A may be added to Table 2 to indicate the maximum transmit power of the user equipment. Refer to Table 8.

For example, for absolute power control, dynamic power control index 4 in the TPC command field in DCI format 0/3/4 may be added to Table 3 to indicate the maximum transmit power of the user equipment. Refer to Table 9.

Optionally, the processor 410 instructs the user equipment to calculate current transmit power $P(i)$ of the user equipment according to formula (1), and when the user equipment uses the maximum transmit power of the user equipment to send a device-to-device signal, $f(i) = f(i-1)$ or $f(i) = 0$.

Therefore, according to the base station provided by this embodiment of the present invention, user equipment can quickly acquire maximum transmit power, and can quickly lower transmit power of the user equipment after a signal is transmitted by using the maximum transmit power, which can lower communication interference on the base station or another user equipment.

Optionally, a format of the downlink control information is 0, 3, 3A, or 4, or a length of the downlink control information is the same as a length of downlink control information in a format of 0, 3, 3A, or 4.

Optionally, the maximum transmit power of the user equipment is maximum transmit power $P_{CMAX}$ of the user equipment or nominal transmit power $P_{PowerClass}$ of the user equipment.

Therefore, according to the base station provided by this embodiment of the present invention, user equipment can quickly acquire maximum transmit power.

It should be understood that, in this embodiment of the present invention, the processor 410 may be a central processing unit (Central Processing Unit, CPU for short), or the processor 410 may be another universal processor, a digital signal processor (DSP), an application-specific integrated circuit (ASIC), a field programmable gate array (FPGA) or another programmable logic device, a discrete gate or transistor logic device, a discrete hardware component, or the like. The universal processor may be a microprocessor or any conventional processor.

The memory 420 may include a read-only memory and a random access memory, and provide an instruction and data for the processor 410. A part of the memory 420 may further include a non-volatile random access memory. For example, the memory 420 may further store information about a device type.

The bus system 430 not only includes a data bus, but may also include a power bus, a control bus, a state signal bus, and the like. For clear description, all kinds of buses are denoted as the bus system 430 in the drawing.

In an implementation process, the steps of the foregoing method may be implemented by using a hardware integrated logic circuit or an instruction in a software form in the processor 410. The steps of the method disclosed with reference to this embodiment of the present invention may be directly executed and accomplished by a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 420, and the processor 410 reads information in the memory 420 and works together with its hardware to implement the steps of the foregoing method. To avoid repetition, details are not described herein again.

It should be understood that the base station 300 and the base station 400 according to the embodiments of the present invention may correspond to the base station in the power control method according to the embodiments of the present invention, and the foregoing and other operations and/or functions of the modules in the base station 300 and the base station 400 are intended to implement the corresponding procedure of the method in FIG. 1. For brevity, details are not described herein again.

In addition, a computer readable medium (or medium) is further provided, including a computer readable instruction that performs the following operation when being executed: executing S110 to S130 in the method in the foregoing embodiment.

In addition, a computer program product is further provided, including the foregoing computer readable medium.

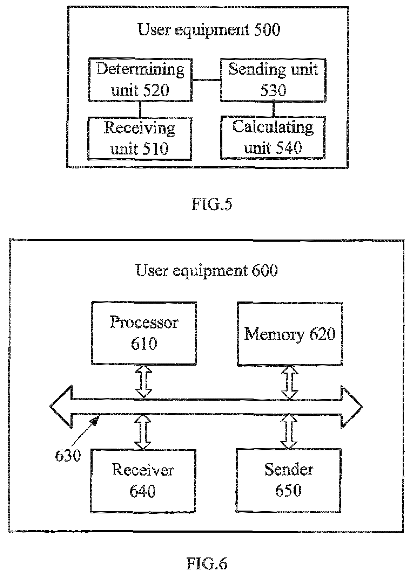

The above describes the base stations in detail according to the embodiments of the present invention with reference to FIG. 3 and FIG. 4, and the following describes user equipment in detail according to embodiments of the present invention with reference to FIG. 5 and FIG. 6.

FIG. 5 shows a schematic block diagram of user equipment 500 according to an embodiment of the present invention. As shown in FIG. 5, the user equipment 500 includes a receiving unit 510, a determining 520, and a sending unit 530.

The receiving unit 510 is configured to: receive a transmit power control parameter sent by a base station, where the transmit power control parameter is used to determine maximum transmit power of the user equipment; and receive an indication, which is sent by the base station, of using the maximum transmit power of the user equipment to send a device-to-device signal.

It should be noted that, in a Long Term Evolution (full English name: Long Term Evolution, LTE for short) system, current transmit power $P(i)$ of the user equipment is determined by using formula (1); therefore, to determine the current transmit power $P(i)$ of the user equipment, the user equipment needs to receive at least transmit power control parameters, such as $P_o$, $\alpha$, and $f(i)$, determined by the base station.

The determining unit 520 is configured to determine the maximum transmit power of the user equipment according to the transmit power control parameter and the indication.

It should be noted that the maximum transmit power of the user equipment may be a specific numerical value determined by the base station, or may be a variable requiring calculation, such as the current transmit power $P(i)$ of the user equipment, maximum transmit power $P_{CMAX}$ of the user equipment, or nominal transmit power $P_{PowerClass}$ of the user equipment, which does not constitute a limitation herein.

The sending unit 530 is configured to use the maximum transmit power of the user equipment to send the device-to-device signal.

The above describes the user equipment in detail according to this embodiment of the present invention with reference to FIG 5.

This embodiment of the present invention is further described in detail in the following with reference to specific examples. It should be noted that the examples in FIG. 5 are merely intended to help a person skilled in the art to better understand this embodiment of the present invention rather than to limit this embodiment of the present invention to a specific numerical value or a specific scenario shown in the examples. A person skilled in the art can obviously make various equivalent modifications or variations according to the given examples in FIG. 5. These modifications or variations shall fall within the scope of this embodiment of the present invention.

According to this embodiment of the present invention, the receiving unit 510 is specifically configured to receive downlink control information sent by the base station, where the downlink control information is used to instruct the user equipment to use the maximum transmit power of the user equipment to send the device-to-device signal.

Optionally, the receiving unit 510 is specifically configured to receive indication signaling sent by the base station, where the indication signaling carries a location of an indication bit in the downlink control information, where the indication bit is used to instruct the user equipment to use the maximum transmit power of the user equipment to send the device-to-device signal.

Optionally, the downlink control information includes a transmit power control command, where the transmit power control command is used to instruct the user equipment to use the maximum transmit power of the user equipment to send the device-to-device signal.

Optionally, the downlink control information includes a dynamic power control index, where the dynamic power control index is used to instruct the user equipment to use the maximum transmit power of the user equipment to send the device-to-device signal, and the dynamic power control index refers to a value of one or more bits.

Optionally, an indication value of the dynamic power control index is the greatest, or the dynamic power control index is newly added.

Optionally, the user equipment further includes: a calculating unit 540, configured to calculate current transmit power $P(i)$ of the user equipment according to formula (1), where when the user equipment uses the maximum transmit power of the user equipment to send a device-to-device signal, $f(i) = f(i\text{-}1)$ or $f(i) = 0$.

Therefore, the user equipment provided by this embodiment of the present invention can quickly acquire maximum transmit power, and can quickly lower transmit power of the user equipment after a signal is transmitted by using the maximum transmit power, which can lower communication interference on a base station or another user equipment.

Optionally, a format of the downlink control information is 0, 3, 3A, or 4, or a length of the downlink control information is the same as a length of downlink control information in a format of 0, 3, 3A, or 4.

Optionally, the maximum transmit power of the user equipment is maximum transmit power $P_{CMAX}$ of the user equipment or nominal transmit power $P_{PowerClass}$ of the user equipment.

Therefore, the user equipment provided by this embodiment of the present invention can quickly acquire maximum transmit power.

In another implementation manner, as shown in FIG. 6, an embodiment of the present invention further provides user equipment 600, where the user equipment 600 includes a processor 610, a memory 620, a bus system 630, a receiver 640, and a sender 650. The processor 610, the memory 620, the receiver 640, and the sender 650 are connected by using the bus system 630. The memory 620 is configured to store an instruction, the processor 610 is configured to execute the instruction stored in the memory 620 to control the receiver 640 to receive a signal, an instruction, or a message, and control the sender 650 to send a signal, an instruction, or a message. The receiver 640 is configured to: receive a transmit power control parameter sent by a base station, where the transmit power control parameter is used to determine maximum transmit power of the user equipment; and receive an indication, which is sent by the base station, of using the maximum transmit power of the user equipment to send a device-to-device signal. The processor 610 is configured to determine the maximum transmit power of the user equipment according to the transmit power control parameter and the indication. The sender 650 is configured to use the maximum transmit power of the user equipment to send the device-to-device signal.

The above describes the user equipment in detail according to this embodiment of the present invention with reference to FIG. 6.

This embodiment of the present invention is further described in detail in the following with reference to specific examples. It should be noted that the examples in FIG. 6 are merely intended to help a person skilled in the art to better understand this embodiment of the present invention rather than to limit this embodiment of the present invention to a specific numerical value or a specific scenario shown in the examples. A person skilled in the art can obviously make various equivalent modifications or variations according to the given examples in FIG. 6. These modifications or variations shall fall within the scope of this embodiment of the present invention.

According to this embodiment of the present invention, the receiver 640 receives downlink control information sent by the base station, where the downlink control information is used to instruct the user equipment to use the maximum transmit power of the user equipment to send the signal.

Optionally, the receiver 640 receives indication signaling sent by the base station, where the indication signaling carries a location of an indication bit in the downlink control information, where the indication bit is used to instruct the user equipment to use the maximum transmit power of the user equipment to send the device-to-device signal.

Optionally, the downlink control information includes a transmit power control command, where the transmit power control command is used to instruct the user equipment to use the maximum transmit power of the user equipment to send the device-to-device signal.

Optionally, the downlink control information includes a dynamic power control index, where the dynamic power control index is used to instruct the user equipment to use the maximum transmit power of the user equipment to send the device-to-device signal, and the dynamic power control index refers to a value of one or more bits.

Optionally, an indication value of the dynamic power control index is the greatest, or the dynamic power control index is newly added.

Optionally, the processor 610 calculates current transmit power $P(i)$ of the user equipment according to formula (1), and when the user equipment uses the maximum transmit power of the user equipment to send a device-to-device signal, $f(i) = f(i\text{-}1)$ or $f(i) = 0$.

Therefore, the user equipment provided by this embodiment of the present invention can quickly acquire maximum transmit power, and can quickly lower transmit power of the user equipment after a signal is transmitted by using the maximum transmit power, which can lower communication interference on a base station or another user equipment.

Optionally, a format of the downlink control information is 0, 3, 3A, or 4, or a length of the downlink control information is the same as a length of downlink control information in a format of 0, 3, 3A, or 4.

Optionally, the maximum transmit power of the user equipment is maximum transmit power $P_{CMAX}$ of the user equipment or nominal transmit power $P_{PowerClass}$ of the user equipment.

Therefore, the user equipment provided by this embodiment of the present invention can quickly acquire maximum transmit power.

It should be understood that, in this embodiment of the present invention, the processor 610 may be a central processing unit (Central Processing Unit, CPU for short), or the processor 610 may be another universal processor, a digital signal processor (DSP), an application-specific integrated circuit (ASIC), a field programmable gate array (FPGA) or another programmable logic device, a discrete gate or transistor logic device, a discrete hardware component, or the like. The universal processor may be a microprocessor or any conventional processor.

The memory 620 may include a read-only memory and a random access memory, and provide an instruction and data for the processor 610. A part of the memory 620 may further include a non-volatile random access memory. For example, the memory 620 may further store information about a device type.

The bus system 630 not only includes a data bus, but may also include a power bus, a control bus, a state signal bus, and the like. For clearer description, all kinds of buses are denoted as the bus system 630 in the drawing.

In an implementation process, the steps of the foregoing method may be implemented by using a hardware integrated logic circuit or an instruction in a software form in the processor 610. The steps of the method disclosed with reference to this embodiment of the present invention may be directly executed and accomplished by a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 620, and the processor 610 reads information in the memory 620, and works together with its hardware to implement the steps of the foregoing method. To avoid repetition, details are not described herein again.

Further, it should be understood that the user equipment 500 and the user equipment 600 according to the embodiments of the present invention may correspond to the user equipment in the power control method according to the embodiments of the present invention, and the foregoing and other operations and/or functions of the modules in the user equipment 500 and the user equipment 600 are intended to implement the corresponding procedure of the method in FIG. 2. For brevity, details are not described herein again.

In addition, a computer readable medium (or medium) is further provided, including a computer readable instruction that performs the following operation when being executed: executing S210 to S240 in the method in the foregoing embodiment.

In addition, a computer program product is further provided, including the foregoing computer readable medium.

It should be noted that the signal mentioned in the entire specification includes but is not limited to: an indication, information, signaling, or a message, which is not limited herein.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution order in various embodiments of the present invention. The execution order of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A power control method, comprising:

   determining (S110), by a base station, a transmit power control parameter, wherein the transmit power control parameter is used to determine maximum transmit power of user equipment;
   sending (120), by the base station, the transmit power control parameter to the user equipment; and
   instructing (S130), by the base station, the user equipment to use the maximum transmit power of the user equipment to send a device-to-device signal, wherein the instructing, by the base station, the user equipment to use the maximum transmit power of the user equipment to send a device-to-device signal comprises:
   sending, by the base station, downlink control information to the user equipment, **characterised in that** the downlink control information comprises a transmit power control command, wherein the transmit power control command includes a dynamic power control index and wherein an indication value of the dynamic power control index is used to instruct the user equipment to use the maximum transmit power of the user equipment to send the device-to-device signal.

2. The method according to claim 1, wherein
   the maximum transmit power of the user equipment is maximum transmit power $P_{\text{CMAX}}$ of the user equipment or nominal transmit power $P_{\text{PowerClass}}$ of the user equipment.

3. A power control method, comprising:

   receiving (S210), by user equipment, a transmit power control parameter sent by a base station;
   receiving (S220), by the user equipment, an indication, which is sent by the base station, of using maximum transmit power of the user equipment to send a device-to-device signal;
   determining (S230), by the user equipment, the maximum transmit power of the user equipment according to the transmit power control parameter and the indication; and
   using, by the user equipment, the maximum transmit power of the user equipment to send the device-to-device signal, wherein the receiving, by the user equipment, an indication, which is sent by the base station, of using maximum transmit power of the user equipment to send a device-to-device signal comprises:
   receiving, by the user equipment, downlink control information sent by the base station, **characterised in that** the downlink control information comprises a transmit power control command, wherein the transmit power control command includes a dynamic power control index and wherein an indication value of the dynamic power control index is used to instruct the user equipment to use the maximum transmit power of the user equipment to send the device-to-device signal.

4. The method according to claim 3, wherein
   the maximum transmit power of the user equipment is maximum transmit power $P_{\text{CMAX}}$ of the user equipment or nominal transmit power $P_{\text{PowerClass}}$ of the user equipment.

5. A base station, comprising:

a determining unit (301), configured to determine a transmit power control parameter, wherein the transmit power control parameter is used to determine maximum transmit power of user equipment;

a sending unit (302) configured to send the transmit power control parameter to the user equipment; and

an indication unit (303), configured to instruct the user equipment to use the maximum transmit power of the user equipment to send a device-to-device signal, wherein

the indication unit is specifically configured to send downlink control information to the user equipment, **characterised in that** the downlink control information comprises a transmit power control command, wherein the transmit power control command includes a dynamic power control index and wherein an indication value of the dynamic power control index is used to instruct the user equipment to use the maximum transmit power of the user equipment to send the device-to-device signal.

6. User equipment, comprising:

a receiving unit (510), configured to: receive a transmit power control parameter sent by a base station, wherein the transmit power control parameter is used to determine maximum transmit power of the user equipment; and receive an indication, which is sent by the base station, of using the maximum transmit power of the user equipment to send a device-to-device signal;

a determining unit (520), configured to determine the maximum transmit power of the user equipment according to the transmit power control parameter and the indication; and

a sending unit (530), configured to use the maximum transmit power of the user equipment to send the device-to-device signal, wherein

the receiving unit is specifically configured to receive downlink control information sent by the base station, **characterised in that** the downlink control information comprises a transmit power control command, wherein the transmit power control command includes a dynamic power control index and wherein an indication value of the dynamic power control index is used to instruct the user equipment to use the maximum transmit power of the user equipment to send the device-to-device signal.

7. The user equipment according to claim 6, wherein

the maximum transmit power of the user equipment is maximum transmit power $P_{CMAX}$ of the user equipment or nominal transmit power $P_{PowerClass}$ of the user equipment.

**Patentansprüche**

1. Leistungssteuerungsverfahren, welches umfasst:

Bestimmen (S110), durch eine Basisstation, eines Sendeleistungs-Steuerparameters, wobei der Sendeleistungs-Steuerparameter verwendet wird, um eine maximale Sendeleistung einer Benutzervorrichtung zu bestimmen;

Senden (120), durch die Basisstation, des Sendeleistungs-Steuerparameters an die Benutzervorrichtung, und Anweisen (S130), durch die Basisstation, der Benutzervorrichtung, die maximale Sendeleistung der Benutzervorrichtung zu verwenden, um ein Gerät-zu-Gerät-Signal zu senden, wobei das Anweisen, durch die Basisstation, der Benutzervorrichtung, die maximale Sendeleistung der Benutzervorrichtung zu verwenden, um ein Gerät-zu-Gerät-Signal zu senden, umfasst:

Senden, durch die Basisstation, von Abwärtsverbindungs-Steuerungsinformationen an die Benutzervorrichtung,

**dadurch gekennzeichnet, dass**

die Abwärtsverbindungs-Steuerungsinformationen einen Sendeleistungs-Steuerungsbefehl umfassen, wobei der Sendeleistungs-Steuerungsbefehl einen dynamischen Leistungssteuerungsindex enthält und wobei ein Angabewert des dynamischen Leistungssteuerungsindex verwendet wird, um die Benutzervorrichtung anzuweisen, die maximale Sendeleistung der Benutzervorrichtung zu verwenden, um das Gerät-zu-Gerät-Signal zu senden.

2. Verfahren nach Anspruch 1, wobei

die maximale Sendeleistung der Benutzervorrichtung eine maximale Sendeleistung $P_{CMAX}$ der Benutzervorrichtung oder eine Nenn-Sendeleistung $P_{PowerClass}$ der Benutzervorrichtung ist.

**3.** Leistungssteuerungsverfahren, welches umfasst:

Empfangen (S210), durch eine Benutzervorrichtung, eines Sendeleistungs-Steuerparameters, der von einer Basisstation gesendet wurde;

Empfangen (S220), durch die Benutzervorrichtung, einer Angabe, welche von der Basisstation gesendet wird, zum Verwenden der maximalen Sendeleistung der Benutzervorrichtung, um ein Gerät-zu-Gerät-Signal zu senden;

Bestimmen (S230), durch die Benutzervorrichtung, der maximalen Sendeleistung der Benutzervorrichtung gemäß dem Sendeleistungs-Steuerparameter und der Angabe; und

Verwenden, durch die Benutzervorrichtung, der maximalen Sendeleistung der Benutzervorrichtung, um das Gerät-zu-Gerät-Signal zu senden, wobei das Empfangen, durch die Benutzervorrichtung, einer Angabe, welche von der Basisstation gesendet wird, zum Verwenden der maximalen Sendeleistung der Benutzervorrichtung, um ein Gerät-zu-Gerät-Signal zu senden, umfasst:

Empfangen, durch die Benutzervorrichtung, von Abwärtsverbindungs-Steuerungsinformationen, die von der Basisstation gesendet wurden,

**dadurch gekennzeichnet, dass**

die Abwärtsverbindungs-Steuerungsinformationen einen Sendeleistungs-Steuerungsbefehl umfassen, wobei der Sendeleistungs-Steuerungsbefehl einen dynamischen Leistungssteuerungsindex enthält und wobei ein Angabewert des dynamischen Leistungssteuerungsindex verwendet wird, um die Benutzervorrichtung anzuweisen, die maximale Sendeleistung der Benutzervorrichtung zu verwenden, um das Gerät-zu-Gerät-Signal zu senden.

**4.** Verfahren nach Anspruch 3, wobei
die maximale Sendeleistung der Benutzervorrichtung eine maximale Sendeleistung $P_{CMAX}$ der Benutzervorrichtung oder eine Nenn-Sendeleistung $P_{PowerClass}$ der Benutzervorrichtung ist.

**5.** Basisstation, welche umfasst:

eine Bestimmungseinheit (301), die dafür ausgelegt ist, einen Sendeleistungs-Steuerparameter zu bestimmen, wobei der Sendeleistungs-Steuerparameter verwendet wird, um eine maximale Sendeleistung einer Benutzervorrichtung zu bestimmen;

eine Sendeeinheit (302), die dafür ausgelegt ist, den Sendeleistungs-Steuerparameters an die Benutzervorrichtung zu senden; und

eine Angabeeinheit (303), die dafür ausgelegt ist, die Benutzervorrichtung anzuweisen, die maximale Sendeleistung der Benutzervorrichtung zu verwenden, um ein Gerät-zu-Gerät-Signal zu senden, wobei

die Angabeeinheit speziell dafür ausgelegt ist, Abwärtsverbindungs-Steuerungsinformationen an die Benutzervorrichtung zu senden,

**dadurch gekennzeichnet, dass**

die Abwärtsverbindungs-Steuerungsinformationen einen Sendeleistungs-Steuerungsbefehl umfassen, wobei der Sendeleistungs-Steuerungsbefehl einen dynamischen Leistungssteuerungsindex enthält und wobei ein Angabewert des dynamischen Leistungssteuerungsindex verwendet wird, um die Benutzervorrichtung anzuweisen, die maximale Sendeleistung der Benutzervorrichtung zu verwenden, um das Gerät-zu-Gerät-Signal zu senden.

**6.** Benutzervorrichtung, welche umfasst:

eine Empfangseinheit (510), die dafür ausgelegt ist: einen Sendeleistungs-Steuerparameter zu empfangen, der von einer Basisstation gesendet wurde, wobei der Sendeleistungs-Steuerparameter verwendet wird, um die maximale Sendeleistung der Benutzervorrichtung zu bestimmen; und eine Angabe zu empfangen, welche von der Basisstation gesendet wird, zum Verwenden der maximalen Sendeleistung der Benutzervorrichtung, um ein Gerät-zu-Gerät-Signal zu senden;

eine Bestimmungseinheit (520), die dafür ausgelegt ist, die maximale Sendeleistung der Benutzervorrichtung gemäß dem Sendeleistungs-Steuerparameter und der Angabe zu bestimmen; und

eine Sendeeinheit (530), die dafür ausgelegt ist, die maximale Sendeleistung der Benutzervorrichtung zu verwenden, um das Gerät-zu-Gerät-Signal zu senden, wobei die Empfangseinheit speziell dafür ausgelegt ist, Abwärtsverbindungs-Steuerungsinformationen zu empfangen, die von der Basisstation gesendet wurden,

**dadurch gekennzeichnet, dass**

die Abwärtsverbindungs-Steuerungsinformationen einen Sendeleistungs-Steuerungsbefehl umfassen, wobei der Sendeleistungs-Steuerungsbefehl einen dynamischen Leistungssteuerungsindex enthält und wobei ein Angabewert des dynamischen Leistungssteuerungsindex verwendet wird, um die Benutzervorrichtung anzuweisen, die maximale Sendeleistung der Benutzervorrichtung zu verwenden, um das Gerät-zu-Gerät-Signal zu senden.

**7.** Benutzervorrichtung nach Anspruch 6, wobei
die maximale Sendeleistung der Benutzervorrichtung eine maximale Sendeleistung $P_{CMAX}$ der Benutzervorrichtung oder eine Nenn-Sendeleistung $P_{PowerClass}$ der Benutzervorrichtung ist.


**Revendications**

**1.** Procédé de commande de puissance, comprenant :

la détermination (S110), par une station de base, d'un paramètre de commande de puissance d'émission, le paramètre de commande de puissance d'émission servant à déterminer une puissance d'émission maximale d'un équipement utilisateur ;
l'envoi (120), par la station de base, du paramètre de commande de puissance d'émission à l'équipement utilisateur ; et
l'ordre donné (S130), par la station de base, à l'équipement utilisateur d'utiliser la puissance d'émission maximale de l'équipement utilisateur pour envoyer un signal de dispositif à dispositif, l'ordre donné, par la station de base, à l'équipement utilisateur d'utiliser la puissance d'émission maximale de l'équipement utilisateur pour envoyer un signal de dispositif à dispositif comprenant :

l'envoi, par la station de base, d'informations de commande en voie descendante à l'équipement utilisateur, **caractérisé en ce que** les informations de commande en voie descendante comprennent une instruction de commande de puissance d'émission, l'instruction de commande de puissance d'émission comportant un index de commande de puissance dynamique, et
une valeur d'indication de l'index de commande de puissance dynamique servant à donner l'ordre à l'équipement utilisateur d'utiliser la puissance d'émission maximale de l'équipement utilisateur pour envoyer le signal de dispositif à dispositif.

**2.** Procédé selon la revendication 1, dans lequel
la puissance d'émission maximale de l'équipement utilisateur est une puissance d'émission maximale $P_{CMAX}$ de l'équipement utilisateur ou une puissance d'émission nominale $P_{PowerClass}$ de l'équipement utilisateur.

**3.** Procédé de commande de puissance, comprenant :

la réception (S210), par un équipement utilisateur, d'un paramètre de commande de puissance d'émission envoyé par une station de base ;
la réception (S220), par l'équipement utilisateur, d'une indication, envoyée par la station de base, d'utiliser une puissance d'émission maximale de l'équipement utilisateur pour envoyer un signal de dispositif à dispositif ;
la détermination (S230), par l'équipement utilisateur, de la puissance d'émission maximale de l'équipement utilisateur selon le paramètre de commande de puissance d'émission et l'indication ; et
l'utilisation, par l'équipement utilisateur, de la puissance d'émission maximale de l'équipement utilisateur pour envoyer le signal de dispositif à dispositif, la réception,
par l'équipement utilisateur, d'une indication, envoyée par la station de base, d'utiliser une puissance d'émission maximale de l'équipement utilisateur pour envoyer un signal de dispositif à dispositif comprenant :

la réception, par l'équipement utilisateur, d'informations de commande en voie descendante envoyées par la station de base,
**caractérisé en ce que** les informations de commande en voie descendante comprennent une instruction de commande de puissance d'émission, l'instruction de commande de puissance d'émission comportant un index de commande de puissance dynamique, et
une valeur d'indication de l'index de commande de puissance dynamique servant à donner l'ordre à l'équipement utilisateur d'utiliser la puissance d'émission maximale de l'équipement utilisateur pour envoyer le signal de dispositif à dispositif.

4. Procédé selon la revendication 3, dans lequel
la puissance d'émission maximale de l'équipement utilisateur est une puissance d'émission maximale $P_{CMAX}$ de l'équipement utilisateur ou une puissance d'émission nominale $P_{PowerClass}$ de l'équipement utilisateur.

5. Station de base, comprenant :

une unité de détermination (301), configurée pour déterminer un paramètre de commande de puissance d'émission, le paramètre de commande de puissance d'émission servant à déterminer une puissance d'émission maximale d'un équipement utilisateur ;
une unité d'envoi (302), configurée pour envoyer le paramètre de commande de puissance d'émission à l'équipement utilisateur ; et
une unité d'indication (303), configurée pour donner l'ordre à l'équipement utilisateur d'utiliser la puissance d'émission maximale de l'équipement utilisateur pour envoyer un signal de dispositif à dispositif,
l'unité d'indication étant plus particulièrement configurée pour envoyer des informations de commande en voie descendante à l'équipement utilisateur,
**caractérisée en ce que** les informations de commande en voie descendante comprennent une instruction de commande de puissance d'émission, l'instruction de commande de puissance d'émission comportant un index de commande de puissance dynamique, et une valeur d'indication de l'index de commande de puissance dynamique servant à donner l'ordre à l'équipement utilisateur d'utiliser la puissance d'émission maximale de l'équipement utilisateur pour envoyer le signal de dispositif à dispositif.

6. Équipement utilisateur, comprenant :

une unité de réception (510), configurée pour : recevoir un paramètre de commande de puissance d'émission envoyé par une station de base, le paramètre de commande de puissance d'émission servant à déterminer une puissance d'émission maximale de l'équipement utilisateur ; et recevoir une indication, envoyée par la station de base, d'utiliser la puissance d'émission maximale de l'équipement utilisateur pour envoyer un signal de dispositif à dispositif ;
une unité de détermination (520), configurée pour déterminer la puissance d'émission maximale de l'équipement utilisateur selon le paramètre de commande de puissance d'émission et l'indication ; et
une unité d'envoi (530), configurée pour utiliser la puissance d'émission maximale de l'équipement utilisateur pour envoyer le signal de dispositif à dispositif,
l'unité de réception étant plus particulièrement configurée pour recevoir des informations de commande en voie descendante envoyées par la station de base,
**caractérisé en ce que** les informations de commande en voie descendante comprennent une instruction de commande de puissance d'émission, l'instruction de commande de puissance d'émission comportant un index de commande de puissance dynamique, et
une valeur d'indication de l'index de commande de puissance dynamique servant à donner l'ordre à l'équipement utilisateur d'utiliser la puissance d'émission maximale de l'équipement utilisateur pour envoyer le signal de dispositif à dispositif.

7. Équipement utilisateur selon la revendication 6, dans lequel
la puissance d'émission maximale de l'équipement utilisateur est une puissance d'émission maximale $P_{CMAX}$ de l'équipement utilisateur ou une puissance d'émission nominale $P_{PowerClass}$ de l'équipement utilisateur.

100

| A base station determines a transmit power control parameter, where the power control parameter is used to determine maximum transmit power of user equipment | ~ S110 |

| The base station sends the transmit power control parameter to the user equipment | ~ S120 |

| The base station instructs the user equipment to use the maximum transmit power of the user equipment to send a device-to-device signal | ~ S130 |

FIG.1

200

| User equipment receives a transmit power control parameter sent by a base station | ~ S210 |

| The user equipment receives an indication, which is sent by the base station, of using maximum transmit power of the user equipment to send a device-to-device signal | ~ S220 |

| The user equipment determines the maximum transmit power of the user equipment according to the power control parameter and the indication | ~ S230 |

| The user equipment uses the maximum transmit power of the user equipment to send the device-to-device signal | ~ S240 |

FIG. 2

Base station 300

Sending unit
302

Indication
unit 303

Determining
unit 301

FIG.3

Base station 400

Processor
410

Memory
420

430

Receiver
440

Sender
450

FIG.4

User equipment 500

| Determining unit 520 | Sending unit 530 |
| Receiving unit 510 | Calculating unit 540 |

FIG.5

User equipment 600

Processor 610

Memory 620

630

Receiver 640

Sender 650

FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2014094213 A1

**Non-patent literature cited in the description**

• **HUAWEI et al.** Power control for D2D Signals. *3GPP DRAFT; R1-141928*